# EUROPEAN PATENT APPLICATION

(11) **EP 4 483 712 A2**
(43) Date of publication of application: **01.01.2025**
(21) Application number: 24204953.4
(22) Date of filing: 22.06.2020
(51) Int. Cl.: A01K 61/13

(54) **SEA LICE INHIBITING SYSTEM**

(30) Priority: 20.06.2019 GB 201908890
(62) Divisional of application: 20737094.1
(71) Applicant: Salar Pursuits Limited, Kings Hill West Malling Kent ME19 4DH (GB)
(72) Inventor: BETT, Andrew, Forfar, DD8 3QW (GB)
(74) Representative: Ellis, Michael James

(57) **Abstract**

A fish cultivation system having a fish cultivation enclosure structure defining a fish cultivation volume and disposed in relation thereto a filtration screen arrangement having a filtration element with a pore size of from 15 to 95 µm, which arrangement is disposed to the interior or exterior of the fish cultivation enclosure as a curtain which extends to a depth of at least 6 m inhibits the passage of algae into fish cultivation cages and therefore prevents suffocation of cultivation fish, while at the same time allowing the passage of water into the cultivation cages to maintain oxygenation of the water in the cage.

## Description

### FIELD OF THE INVENTION

This invention relates generally to the field of aquaculture and more particularly to cultivation of fish in marine environments where cultivated fish may become exposed to copepod or sea lice parasite attack within the confines of cultivation cages. More particularly the invention relates to a fish cultivation system and filtration screen assembly therefor for inhibition of ingress of sea lice larvae, other marine copepods, jellyfish and algae into fish cultivation cages, to a method of screening a fish cultivation enclosure and to a method of cultivating fish.

### BACKGROUND OF THE INVENTION

The aquaculture fin fish industry is an important provider of certain species of fish, such as Atlantic Salmon which are cultivated in cages submerged in an offshore marine environment. Ectoparasitic copepods such as sea lice that occur naturally around the world are pathogenic to salmonid species and are attracted to the unnaturally high density of salmon populations retained in multi-cage cultivation. In this environment, large numbers of sea lice can quickly cause severe skin damage and consequent high mortality among fish populations. The cost involved in monitoring protecting and treating cultivated fish from sea lice is a significant element of the cost of fish farm cultivation.

Previous methods to reduce the impact on these parasite attacks involved removal of the fish for treatment in pesticide wash tanks. In recent years environmental concerns over the use of certain pesticides has reduced pesticide use and encouraged other methods. One such method is the use of parasite eating cleaner fish such as Wrasse and lumpfish which are introduced into the cage along with the cultivation fish where they act to remove and consume the ectoparasite sea lice in a natural manner. Currently, such small parasite eating fish have a high mortality rate when introduced into the unnatural environment of cultivation cages and therefore the efficiency of parasite removal reduces and the risk of parasite damage increases throughout the fish cultivation season. Further, there are some concerns over the effect on overfishing of Wrasse and the like due to the high mortality rate.

Another, more passive, solution has been to propose the use of a skirt to inhibit to the transport of lice or lice larvae into the cage through barrier means.

In GB-A-2517588, there is described a fine meshed fluid-permeable net for protecting fish farm cages against sea lice and meroplankton while at the same time maintaining oxygen supply and preventing harmful fouling on the net line. This entails enveloping the farm cage with the fine mesh fluid permeable net which extends down 5 to 15 m. The mesh width is stated as being from 100 µm to 1000 µm and typically 350 µm, where it is assumed this mesh will stop free-living stages of salmon lice.

Another passive solution is defined in IN-B-301282, which describes a strong lightweight anti-fouling flexible woven fabric which has a mismatch of warp and weft yarn denier (linear mass density). It refers to a fabric made with the yarn for use around aquaculture cages or a full farm site, for the purpose of blocking harmful pests, parasites, organisms and animals from entering into the cage/farm. It describes a warp yarn comprises 500 denier HDPE monofilament yarn, which is hydrophobic, while the weft direction yarn comprises a 1000 denier polyester multifilament hydrophilic yarn. However, such woven fabrics are heavy, offer only limited porosity and are difficult to clean.

Further problems arise from ingress of microjellyfish (e.g. *Dipleurosoma typicum*) into aquaculture cages in large numbers which can cause mass killing events.

Algal blooms (dinoflagellates) are increasingly problematic for the fin fish aquaculture industry, including offshore fin fish aquaculture (such as salmon farming). Blooms of toxic microalgae such as *Cochlodinium sp.* have killed hundreds of thousands of salmon in Chile in recent years, while the North Atlantic salmon farming industry has seen increasing incidences of algal blooms, such as of the *Chrysochromulina* family and the *Alexandrium* family (e.g. *Alexandrium tamarense*)*.* Algal blooms in summer 2019 are said to have led to the loss of 11,000 tonnes of salmon in Norway alone. The cause of mortality of salmon in farms affected by algal blooms is typically suffocation by lack of oxygen. Algae can attach to the gill membrane of the fish and damage them preventing the fish from taking up oxygen. A bloom will start to kill salmon within hours. Various methods can be adopted to try and avoid the worst effects of an algal bloom. These include premature harvesting of the salmon, requiring prompt action before a bloom affects a farm or before the fish die in large numbers. Preventative measures include surrounding the aquaculture cage with a tarpaulin and optionally pumping water into the cage from depth. Aerating the water in the cage, to mobilise the algae and increase the oxygen available in the cage for the salmon to take up is also tried.

The aquaculture industry, particularly sea-farming of Atlantic salmon, finds difficulty with seals attacking cages, causing tears in cage nets and loss of fish. There are to widely adopted methods to prevent seal attacks on aquaculture cages and they are killing seals (either through culling or specific targeting of nearby salmon, usually by shooting them) or scaring them (generally using acoustic scarers or `acoustic deterrent devices'). Both methods have come under criticism, the former for unnecessarily impacting upon local seal populations and the latter for the stress and impact on local wildlife (such as porpoises, dolphins and whales) also affected by acoustic scarers.

The inventor has devised systems for addressing the shortcomings of existing methods.

### PROBLEM TO BE SOLVED BY THE INVENTION

There is a need for improvements in protection of fish cultivated in marine cages and subject to attack by naturally occurring parasitic copepods.

There is a need for improvements in protection of fish cultivated in marine cages and subject to attack by naturally occurring micro-jellyfish, algal blooms and other hazards.

There is a need for improvements in protection of fish cultivated in marine cages from attack by marine predators such as seals.

It is an object of this invention to provide a screen assembly for a fish cultivation system which inhibits ingress of marine copepods and other parasites and pests.

It is a further object of the invention to provide a fish farm cultivation system in which an enclosure or cage incorporates a screen to inhibit ingress of sea lice larvae and/or micro-jellyfish and/or algal blooms.

### SUMMARY OF THE INVENTION

In accordance with a first aspect of the invention, there is provided a fish cultivation system comprising
a fish cultivation enclosure structure defining a fish cultivation volume; and, (optionally forming the fish cultivation enclosure structure or disposed in relation to the enclosure structure),
a filtration screen assembly for inhibiting ingress of marine copepods, such as sea lice, and/or marine parasites or pests into the fish cultivation volume, the filtration screen assembly comprising a filtration element having a pore size of up to 200 µm and at least one porous reinforcing element with an average pore size of greater than the filtration element.

In a second aspect of the invention, there is a filtration screen assembly for a fish cultivation system, the filtration screen assembly comprising a filtration element having a pore size preferably of up to 200 µm and at least one porous structural supporting or reinforcing element with an average pore size of greater than the filtration element, whereby for inhibiting ingress of marine copepods into the fish cultivation volume.

In a third aspect of the invention, there is provided a method of screening a fish cultivation enclosure, the method comprising providing a filtration screen assembly as defined herein as, or in relation to, the fish cultivation enclosure.

In a fourth aspect of the invention, there is provided a method of cultivating fish, the method comprising provide a fish cultivation enclosure having a filtration screen assembly as defined herein forming the fish cultivation enclosure structure, or disposed in relation thereto, to inhibit ingress of marine copepods into a fish cultivation volume.

In a fifth aspect of the invention, there is provided use of a mesh filtration element having a pore size of from 125 to 200 µm to inhibit ingress of the larvae of marine copepods into a fish cultivation enclosure by disposing the filtration element about an inner or outer perimeter of a fish cultivation enclosure preferably to a depth of at least 6 m.

In a sixth aspect of the invention, there is provided use of a mesh filtration element having a pore size of up to 300 µm, preferably up to 200 µm and more preferably up to 175 µm, to inhibit ingress of jellyfish and/or the larvae of marine copepods into a fish cultivation enclosure by disposing the filtration element in relation to the fish cultivation enclosure, inside or outside the enclosure, in order to envelop, sub-surface, a fish cultivation volume.

In a seventh aspect of the invention, there is provided a fish cultivation system comprising:
a fish cultivation enclosure structure defining a fish cultivation volume; and, (optionally forming the fish cultivation enclosure structure or disposed in relation to the enclosure structure),
a filtration screen arrangement for inhibiting ingress of algae into the fish cultivation volume, the filtration screen arrangement comprising a filtration element having a pore size of up to 150 µm, preferably up to 100 µm and preferably from 40 to 80 µm.

In an eighth aspect of the invention, there is a filtration screen arrangement for a fish cultivation system, the filtration screen arrangement comprising a filtration element having a pore size of up to 150 µm preferably up to 100 µm and preferably from 40 to 80 µm for inhibiting the ingress of algae into a fish cultivation volume.

In a ninth aspect of the invention, there is provided a use and method of screening a fish cultivation enclosure against ingress of algae, the use and method comprising providing a filtration element as defined herein as, or in relation to, a fish cultivation enclosure.

In a tenth aspect of the invention, there is provided a fish cultivation system comprising:
a fish cultivation enclosure structure defining a fish cultivation volume, the fish cultivation enclosure structure comprising a porous mesh or net; and,
a water-pumping system for pumping water into the fish cultivation volume.

In an eleventh aspect of the invention, there is provided a fish cultivation system comprising a fish cultivation enclosure of structural netting and an inner cultivation enclosure formed of a filtration screen assembly, the filtration screen assembly comprising a filtration element having a pore size of up to 200 µm and at least one porous structural supporting or reinforcing element with an average pore size of greater than the filtration element.

In a twelfth aspect of the invention, there is provided a fish food formulation for feeding fin fish species in aquaculture systems, the fish food formulation characterized by being buoyant in sea water.

In a thirteenth aspect of the invention, there is provided a fish cultivation system comprising:
a fish cultivation enclosure structure defining a fish cultivation volume; and
a food delivery system for delivering food, such as that defined above, to the fish cultivation enclosure, which food delivery system comprises one or a plurality of food outlets for the release of food into the fish cultivation enclosure, said one or more food outlets disposed at a depth of at least two metres.

In a fourteenth aspect of the invention, there is provided a fish cultivation system comprising a fish cultivation enclosure structure defining a fish cultivation volume and a visual interference arrangement configured to interfere with, inhibit or obstruct the visual perception by seals of fish within the enclosure structure.

In a fifteenth aspect of the invention, there is provided a use of one or more visual interference arrangements provided as or in association with a fish cultivation enclosure structure to in interfere with, inhibit or obstruct the visual perception by seals of fish within the enclosure structure of fish cultivation system to thereby reduce seal preying events.

### ADVANTAGES OF THE INVENTION

The fish cultivation system of the invention having a fish cultivation enclosure or cage provided with a filtration screen assembly inhibits the passage of sea lice larvae into fish cultivation cages and therefore prevents infestation of cultivation fish with sea lice, while at the same time allowing the passage of water into the cultivation cages to maintain oxygenation of the water in the cage.

The fish cultivation system of another aspect of the invention having a cultivation enclosure or cage provided with a filtration screen arrangement inhibits or prevents the passage of algae into fish cultivation cages and therefore prevents or delays the suffocation of cultivation fish in the event of an algal bloom.

The fish cultivation system having an enclosure volume filtration screen assembly or filtration screen arrangement envelope serves to interfere with the visual cues required for seal attack and thus reduces the risk of seal attack or damage on aquaculture pens.

### BRIEF DESCRIPTION OF THE DRAWINGS

Figure 1a is a schematic illustration of a fish cultivation system of one embodiment of the present invention;
Figure 1b illustrates in magnified cut-out form a filtration screen assembly for use in the system of Figure 1a;
Figure 2a is a schematic illustration of a fish cultivation system of another embodiment of the present invention;
Figure 2b illustrates in magnified cut-out form a filtration screen assembly for use in the system of Figure 2a;
Figure 3a is a schematic illustration of a fish cultivation system of another embodiment of the present invention;
Figure 3b illustrates in magnified cut-out form a filtration screen assembly for use in the system of Figure 3a;
Figure 4 is a schematic illustration of a fish cultivation system of another aspect of the present invention;
Figure 5a is a schematic illustration of a fish cultivation system of another aspect of the present invention;
Figure 5b is a schematic illustration of a filtered, reduced temperature water replenishment system for use in the fish cultivation system of Figure 5a, according to an embodiment of the invention;
Figure 6 is a schematic illustration of a further embodiment of the filtration screen assembly of the present invention;
Figure 7 is a schematic illustration of a fish cultivation system of a further embodiment of the invention
Figure 8 is a schematic illustration of a fish cultivation system of another aspect of the invention; and
Figure 9 is a schematic illustration of a fish cultivation system of one embodiment incorporating a buoyant feeding arrangement of a further aspect of the invention.

### DETAILED DESCRIPTION OF THE INVENTION

The present invention is directed to a fish cultivation system comprising a fish cultivation enclosure structure or cage having a filtration screen assembly and, in another aspect, to the filtration screen assembly for use in the fish cultivation system. It further relates to a method for screening sea lice larvae and other parasites and pests from a fish cultivation volume and to a method of aquaculture using the fish cultivation system.

The filtration screen assembly comprises a filtration element having a pore size of up to 200 µm and at least one porous reinforcing element with an average pore size of greater than the filtration element.

The filtration screen assembly and system incorporating it is particularly effective in the screening of the larvae of marine copepods of the order siphonostomatoida, family Caligidae, especially of the genus *Caligus* and *Lepeoptheirus* (which together will be referred to generally as sea lice herein). It may particularly be effective in screening *Caligus rogercresseyi* and *Lepeophtheirus salmonis.* It is particularly concerned with Atlantic *L. salmonis.*

In general, the screening of sea lice larvae to inhibit ingress into fish cultivation volumes defined by fish cultivation enclosures may be achieved by providing the filtration screen assembly and disposing it about a full perimeter of the enclosure structure. The assembly may be disposed to the exterior of the enclosure structure, to the interior of the enclosure structure or may be integral with (e.g. forms at least a part of) the enclosure structure. In one embodiment, it is preferably disposed to the interior of the enclosure structure or is integral with (e.g. forms at least a part of) the enclosure structure.

According to one general embodiment, the filtration screen assembly, is configured to surround a portion of a fish cultivation volume from a water surface to a depth of at least 4 m, preferably at least 6 m and typically from 6 to 8 m, for example in the form of a curtain. In a preferred embodiment, the filtration screen assembly is disposed to the interior of the fish cultivation enclosure. This is particularly applicable for sea lice larvae screening.

In another general embodiment, the filtration screen assembly entirely envelopes or encases, in the sub-surface, the fish cultivation volume (forming a filtration screen assembly envelope). In a preferred embodiment, the filtration screen assembly is disposed to the interior of the fish cultivation enclosure.

In one particular embodiment, the filtration screen assembly envelope is disposed to the interior of the fish cultivation enclosure, which itself may be a conventional salmon cage, for example. The filtration screen assembly envelope may be secured to the fish cultivation enclosure at key points, for example, at the rim (e.g. to a HDPE pipe) and at a depth of 8 to 10m (e.g. via an internal circumferential element disposed in the filtration screen assembly envelope). Preferably, the filtration screen assembly envelope may extend to a depth of up to 10 m, preferably from 6 to 8 m. Such a filtration screen assembly, forming an envelope may be useful in retrofitting to existing fish cultivation systems (e.g. salmon farm cages) by disposing the filtration screen assembly or envelope thereof into the fish cultivation volume, and secure it to the fish cultivation system (e.g. the enclosure structure) at key points, ideally at the top (e.g. rim) and bottom of the cage.

In another particular, and more preferred embodiment, the filtration screen assembly is integral with and/or forms at least a portion of the fish cultivation enclosure. By this it is meant that the filtration screen assembly may define the entirety of the net portion of the structural enclosure or may form a portion thereof (e.g. the top 4 to 6 m or up to 8 m).

As well as acting as a screen for sea lice larvae, a system according to this general embodiment may be effective in screening of other species such as jellyfish. Further, unconsumed feed and particulates containing medicines, as well as fish faeces may be prevented from egress from the fish cultivation enclosure, thus reducing environmental impact of sea fish cultivation. Instead, such materials may be directed to the base and periodically removed (e.g. via a pump) or directed into a container or basket disposed at the base of the fish cultivation enclosure.

Preferably, the filtration screen assembly is configured to extend by a distance above the normal surface of the water so that waves do not cause water to advance over the upper edge of the screen and risk ingress of sea lice larvae. Preferably, the filtration screen assembly is configured to extend above the water by at least 50 cm above normal sea level and more preferably at least 1 m and typically up to 1.5 m.

In some embodiments, as mentioned above, the filtration screen assembly may be effective in screening of other pests in fish cultivation, such as jellyfish, including micro jellyfish. In these embodiments, they may preferably be effective in screening *Dipleurosoma typicum* and mauve stingers.

The filtration screen assembly may have one porous reinforcing (or structural supporting) element disposed on or in relation to one side of the filtration element or may have two porous reinforcing elements (or structural supporting elements), one disposed on each side of the filtration element so as to sandwich it.

The one or more porous reinforcing elements preferably have a pore size of at least 500 µm and preferably at least 1 mm, more preferably in the range 2.5 mm to 10 cm, more preferably 0.5 mm to 5 cm, e.g. from 1 to 10 cm. Still more preferably, the pore size of the porous reinforcing element, is a square mesh of 1 to 3 cm, preferably about 2 cm.

Preferably the or each porous reinforcing element is disposed adjacent to and in laminar arrangement with the filtration element. The porous reinforcing element may cooperate entirely with the filtration element or may cooperate or overlap at least 75% of the area of the filtration element, more preferably at least 90% and still more preferably at least 95%.

Preferably, the filtration screen assembly comprises at least two reinforcing elements, a first, outer, reinforcing element and a second, inner, reinforcing element (which may be the same or different).

In one embodiment, the or each porous reinforcing element is discrete from the fish cultivation enclosure structure.

In another embodiment, one porous reinforcing element is integral with or comprises the fish cultivation enclosure structure. In a particular embodiment, the fish cultivation enclosure structure is formed of the filtration screen assembly, in which case an inner or preferably an outer porous reinforcing element is a knotted or unknotted mesh net (e.g. of polypropylene), such as that typically used in salmon cages. Thus, in this embodiment, it is preferred that the fish cultivation enclosure structure comprises an enclosure net and wherein at least a portion of the enclosure net is configured to be one of the porous reinforcing elements of the filtration screen assembly.

The filtration element may have a pore size of up to 200 µm and preferably less than 200 µm, more preferably up to 180 µm still more preferably at least 40 µm, more preferably at least 50 µm, more preferably at least 80 µm, still more preferably in the range 125 µm to 175 µm and ideally in the range 135 µm to 160 µm and most preferably about 150 µm. By providing a filtration element having a pore size of less than 200 µm and more preferably up to about 175 µm (and especially 150 µm or less), ingress of sea lice larvae can be inhibited and even prevented. By providing a filtration element of a pore size of at least 125 µm, a sufficiently robust filtration screen can be provided which is efficient in transport of water therethrough under tidal flows and thus is capable of maintaining natural oxygenation of the fish cultivation volume of water in a sea fish farm.

In a preferred embodiment, the filtration element has a pore size of from 125 to 170 µm, preferably 130 to 160 µm.

Preferably, the filtration element is a woven mesh. More preferably, the filtration element is a woven mesh of synthetic fibres such as nylon (e.g. Nylon 6), polyester or polypropylene, more preferably nylon.

Preferably the filtration element is a square mesh.

The filtration element preferably has a warp and weft of a density within 25% of each other, more preferably within 10% and most preferably of identical density, which may be, for example, from 80 to 150 threads per inch.

In one embodiment, the filtration element may have a weight of 1.5 to 3 ounces per square yard.

Preferably, the filtration element has an open area of at least 30%, e.g. in the range 30 to 45%, e.g. from 33 to 40%.

The reinforcement elements may take any suitable form. For example, they may independently be optionally comprise synthetic woven or unwoven meshes, may optionally have a self-supporting stiffness, may optionally comprise nets (e.g. of polypropylene) typically used in fish farms, may optionally comprise a porous woven fabric such as that defined in IN-B-301282 (the disclosure of which is incorporated herein by reference for this purpose).

In one particular embodiment of the invention (and a further aspect), the filtration screen assembly comprises two or more filtration elements together and the pair of filtration elements by a pair of porous structural supporting or reinforcing elements. Optionally, the assembly comprises of two outer reinforcing elements, two filtration elements and between the two filtration elements, a central reinforcing element for additional robustness. The reinforcing elements having an average pore size of greater than the filtration element.

The fish cultivation system as described herein is particularly suitable for the cultivation of salmon.

In the seventh aspect of the invention, defined above, a fish cultivation system comprises a fish cultivation enclosure structure defining a fish cultivation volume; and, (optionally forming the fish cultivation enclosure structure or disposed in relation to the enclosure structure), a filtration screen arrangement (which is the eighth aspect referred to above) for inhibiting ingress of algae into the fish cultivation volume. The filtration screen arrangement according to this aspect comprises a filtration element having a pore size of up to 150 µm, preferably at least 15 µm, more preferably up to 100 µm, still more preferably in the range from 25 to 95 µm, preferably from 40 to 80 µm and optionally up to 75 µm.

By providing a filtration element having a pore or mesh size as described, algae, especially when formed as a colony or in an algal bloom, may be inhibited or prevented from passing through into the aquaculture cage and thereby preventing harm to the fish.

The filtration screen arrangement may take any suitable form described above in relation to the filtration screen assembly of the earlier aspects of the invention, in terms of its relationship with the fish cultivation enclosure structure and in terms of its structure (and use of reinforcing elements). For example, the filtration screen arrangement may be disposed to the interior or exterior of the fish cultivation enclosure structure, either as a curtain or an enclosure envelope, or may form the or a portion of the fish cultivation structure (in a similar way to that described above in relation to the filtration screen assembly).

Preferably, the filtration screen arrangement is provided as a curtain, either to the interior or the exterior of a separate enclosure structure, and preferably extending to a depth of at least 4 m, preferably from 5 to 10 m, e.g. at least 6 m and most preferably from 7 to 9 m. This is in order to inhibit passage of algae which tends to form close to the surface of the sea. Preferably the filtration screen arrangement is provided as a curtain to the exterior of the enclosure structure.

Optionally, the filtration screen arrangement may be configured for deployment in the event of an algal bloom affecting or likely to affect the aquaculture system. For example, it may be lowered into a deployed configuration in which it forms a protective curtain and while deployed, action can be taken to protect or harvest the fish population (e.g. remove them to another location or provide water circulation via pumps). The filtration screen arrangement may then be returned, e.g. by being concertinaed, or rolled or reeled back into a cartridge (disposed, for example) about a circumference of the aquaculture cage at or above the surface, to its stowed position.

Preferably, the filtration screen arrangement consists of the filtration element and optionally any means for securing in a deployed or stowed position and any means or mechanism for effecting deployment or stowing of the element.

The filtration screen arrangement may be used to prevent harm to fish in the event of an algal bloom affecting the aquaculture cage.

In a further aspect of the invention, a fish cultivation system comprises a fish cultivation enclosure structure defining a fish cultivation volume and a visual interference arrangement configured to interfere with, inhibit or obstruct the visual perception by seals of fish within the enclosure structure. Use of one or more visual interference arrangements provided as or in association with a fish cultivation enclosure structure may serve to interfere with, inhibit or obstruct the visual perception by seals of fish within the enclosure structure of fish cultivation system to thereby reduce seal preying events. It is, without being bound by theory, understood that seals make use of visual cues in addition to vibrational/ripple cues (detected by their whiskers) to locate and pursue prey when hunting. By interrupting one or more of those cue sources, it is believed that the attention or continued attention of seals can be interrupted. In the present aspect, the visual cues (and potentially cues associated with touch, e.g. vibrational/ripples) can be disrupted by providing a visual interference arrangement. In one embodiment, a visual interference arrangement comprises any string like or trailer element provided on the fish cultivation enclosure structure (typically a net) to obstruct the view (for example, one or more trailing members of, e.g. from 1 to 5 cm in length may, be provided in relation to each aperture of a mesh net to obscure a seal's view of the fish in the cage). In another, preferred, embodiment, the visual interference arrangement comprises a filtration element or filtration assembly or filtration arrangement as described above in the form of any of the embodiments described. It is believed that a filtration assembly or arrangement disposed about an enclosure volume, which comprises a filtration element having a mesh size of up to 200 µm, more preferably up to 175 µm, will serve to disrupt visual cues to the seal. Preferably, the filtration assembly (or arrangement) is provided to enclose an enclosure volume so as to disrupt visual cues to the seal from all potential angles of attack.

In embodiments of the invention and aspects thereof described above, especially in which filtration screen assembly or arrangement forms an enclosure (e.g. by way of a discrete internal enclosure or envelope or as part of the primary enclosure structure) but also when forming a curtain, it is preferred that the system is provided a source of fresh, oxygenated and cold sea water. Thus, it is a further aspect (and preferred embodiment of the above) that a fish cultivation system comprises a fish cultivation enclosure structure defining a fish cultivation volume, the fish cultivation enclosure structure comprising a porous mesh or net; and, a water-pumping system for pumping water into the fish cultivation volume.

Without being bound by theory, it is believed that water flow into and out of an aquaculture system enclosure and resultant oxygenation of the water in an aquaculture system as defined above may be effective, particularly in tidal flows and especially when the filtration element mesh size is toward the higher end of the range (e.g. approaching 200 µm and even approaching 150 µm) and depending upon the depth of the curtain/degree of containment by the filtration element. However, it may be the case that, especially for smaller mesh size filtration elements or where the filtration assembly forms the enclosure structure or a discrete enclosure envelope (or in any case where enhanced oxygenation or cooling are required), that supplemental oxygenation may be required. Thus, preferably, the system is provided with a water-pumping system.

The water pumping system comprises of at least one, preferably more than one (and most preferably two) oxygenated water supply pipes for supplying oxygenated sea water to the enclosure. By oxygenated, it need not necessarily mean that oxygen has been added, but instead that seawater is sourced from outside the aquaculture enclosure where oxygen may be depleted due to insufficient inflow. The water supply pipes may be configured to deliver sea water from external to the aquaculture enclosure to within the aquaculture enclosure, either by disposing the fresh sea water into the top of the aquaculture enclosure, or via outlets disposed at a depth of up to 8 m, preferably from 1 to 6 m, more preferably from 2 to 4 m within the enclosure. Preferably, especially where two or more outlets are provided, they are configured such as to provide a degree of circulation of water in the enclosure, either clockwise or counterclockwise, for example.

The water pumped into the enclosures will serve to increase the oxygen level within the enclosure, which may be depleted by reduced tidal flow through the cage and may serve to lower the temperature (by taking cooler water from a greater depth) which may be to the benefit of the fish.

The supply pipes may be supplied with water from a depth of at least 5 m, e.g. up to 15 m, but more typically up to about 10 m, such as 6 to 8 m, via a pump or pumping arrangement.

The water supplied to the enclosure volume is preferably subject to filtration (e.g. to ensure no sea-lice larvae, micro-jellyfish or even algae are allowed to enter the volume via the pumps), e.g. by passing the water through filter members which preferably have a mesh or pore size similar to the filtration element of the filtration assembly (e.g. up to 200 µm, and preferably about 100 µm). The filter members are preferably disposed in relation to the pumps.

Optionally, the pumps may be provided on a surface vessel (e.g. a feed barge), on pontoons attached to the aquaculture system enclosure or the like and served by water collection pipes extending to a depth beneath the surface (outside of the enclosure). Alternatively, the pumps are sub-surface pumps which may, for example, be fixed by stanchions or other securing or mooring arrangement to the aquaculture cage.

Depending upon the size and volume of the enclosure, the pumps may be configured to deliver any suitable volume, such as up to a cumulative 50,000 litres of sea water per minute to the aquaculture enclosure, preferably at least a cumulative 5000 litres per minute. Preferably, each pump is configured to deliver from 5000 to 15,000 litres per minute and more preferably around 10,000 litres per minute. Preferably, especially in an enclosure with a diameter around 50 m and a depth of from 8 to 16 m, the system is configured to deliver a cumulative 15,000 to 25,000 litres per minute to the enclosure.

The systems of the present invention are applicable to aquaculture systems of any size, from 25 m to 150 m diameter, for example, but preferably up to 110 m diameter, e.g. up to 75 m diameter and for example in the range 40 to 60 m diameter. In the specific description below, reference is made to cages having a 50 m diameter, but it should be understood that the invention is applicable to aquaculture cages of any suitable size.

In a preferred embodiment of the invention, the system of the invention comprises as the structural enclosure a filtration assembly as defined above, thereby forming a complete enclosure, is provided with a water pumping system as defined above and is configured to have a depth of up to 10 m, more preferably from 6 to 8 m and preferably has a waste collection arrangement.

The fish cultivation systems as described herein (which may otherwise be referred to as aquaculture cages) may typically comprises the fish cultivation structure being a net (or comprising a filtration screen assembly) disposed in relation to a frame arrangement. The frame arrangement may be any suitable frame arrangement and any of many types used in aquaculture, especially sea water aquaculture, such as in salmon farming. One common frame arrangement utilizes a frame of HDPE pipes in a circular arrangement, with for example at least a pair of floating pipes and a handrail provided in connection with one another and typically a walkway disposed over the floating pipes.

There may be used in relation to any of the embodiments described herein, particularly embodiments in which a filtration element is used within a primary enclosure structure or immediately adjacent such an enclosure structure, and in particular to filtration screen assemblies that are disposed on the interior of the primary structural enclosure, form the or a portion of the primary structural enclosure or form a discrete filtration screen assembly envelope as discussed above, a further system and method for cleaning the filtration screen assembly. In one embodiment, the filtration screen assembly may be periodically lifted from the water to enable power hosing to remove detritus. Alternatively, divers may descend to use power hoses underwater to clean material from the filtration screen assembly. In a further alternative embodiment, a robotic cleaning device may be provided to move around the interior of the enclosure to clean the filtration screen assembly, the robotic cleaning device preferably comprising a high pressure water cleaning mechanism.

In a further aspect a fish food formulation for feeding fin fish species (such as salmon) in aquaculture systems is characterized by being buoyant in sea water.

The fish food formulation is preferably formulated so that the average density, when wet (i.e. once disposed in sea water) is less than sea water, such that it rises when the fish feed is released at a depth (e.g. of from 2 to 8 m). Preferably, the fish food formulation is in pellets and preferably the pellets have an average specific gravity of less than 1.025 (the approximate specific gravity of sea water), more preferably less than 1 (because some sheltered inshore or sea loch locations may have a lower salinity), such as from 0.5 to 0.99, preferably form 0.75 to 0.95, more preferably from 0.85 and still more preferably at least 0.9.

In one embodiment, the fish food formulation is made buoyant by including a buoyant media or food component, such as proteinaceous microspheres that are optionally air/gas-filled (i.e. microbubbles) or comprise a nutritious oil (of density less than sea-water) liquid filling (i.e. proteinaceous nutritious oil microcapsules). Optionally, microspheres are in the range of 10 to 900 µm in diameter, preferably from 50 to 500 µm and more preferably from 100 to 250 µm in diameter.

Optionally a fish food pellet comprises a low-density filler, such as a bark or wood-derived material, a plant fibre material, ash or charcoal or a natural wax, to contribute to an overall specific gravity less than 1.

The formulation should be such as to deliver typical or required nutrition balance for the fish, such as a suitable proportion, as is known in the art of protein (e.g. 40 to 55% by weight), lipid (e.g. 15 to 30%), carbohydrate (e.g. 8 to 15%) and fibre (e.g. 1 to 5%).

In a related aspect (and preferred embodiment of the above aspects), a fish cultivation system comprises a fish cultivation enclosure structure defining a fish cultivation volume and a food delivery system for delivering food, such as that defined above, to the fish cultivation enclosure, which food delivery system comprises one or a plurality of food outlets for the release of food into the fish cultivation enclosure, said one or more food outlets disposed at a depth of at least two metres (e.g. up to 10 m in depth and preferably from 4 to 8 m).

The fish food delivery system preferably comprises a feed hub configured to float or suspend or mount on a floating member (e.g. a 'birdcage') of an aquaculture enclosure system or the cage frame. The feed hub will be the point on a particular enclosure that feed is delivered, by pipe typically, from a feed barge. Alternatively, the feed hub may comprise a hopper for addition of feed. Disposed in relation to the hub may be one or more down pipes configured to transfer feed to a release point which may be up to 10m below the surface, and is preferably at least 1m below the surface, more preferably from 2 to 8 m, e.g. from 4 to 6 m. The one or more down pipes may be connected to a lateral sprayer or a plurality of lateral arms with a distal outlet for the release of food.

The invention will now be described in more detail, without limitation, with reference to the accompanying Figures.

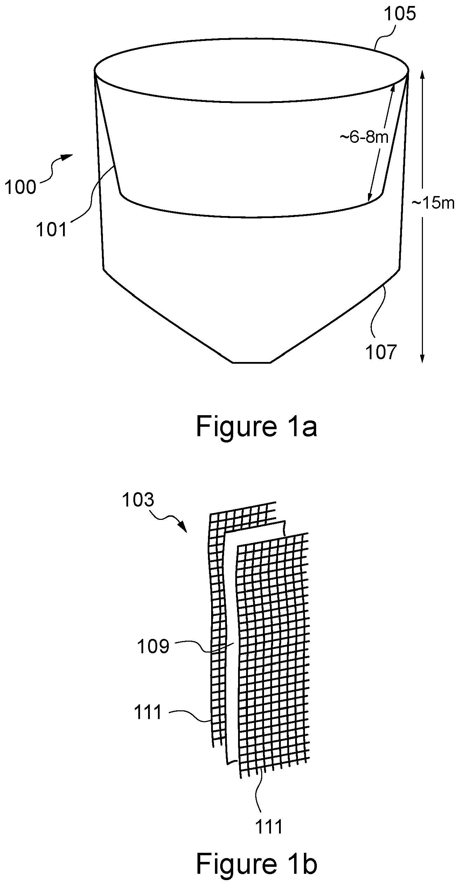

In Figure 1a, a salmon cultivation cage 100 of depth 15 m and 50 m diameter is provided with a curtain 101 of a filtration screen assembly 103 (illustrated in Figure 1b) suspended from a floating perimeter pipe 105 at an upper portion of the cage 100 and extends to a depth of 6 to 8 m, which is the depth sea lice larvae tend to occupy. The curtain 100 is free floating at the bottom or may be weighted or secured to the enclosure net 107 of the cage 100. The curtain 101 is disposed inside the cage 100, forming a curtain 101 about the perimeter of the interior of the cage 100 and generally disposed adjacent to the netting 107 of the cage. As shown in Figure 1b, the filtration screen assembly 103 comprises a 150 µm mesh size woven Nylon mesh screen 109 disposed between two layers of reinforcing mesh 111. The reinforcing mesh 111 may have a mesh size of considerably larger than the mesh screen 109 and provides robustness and protection for the mesh screen 109.

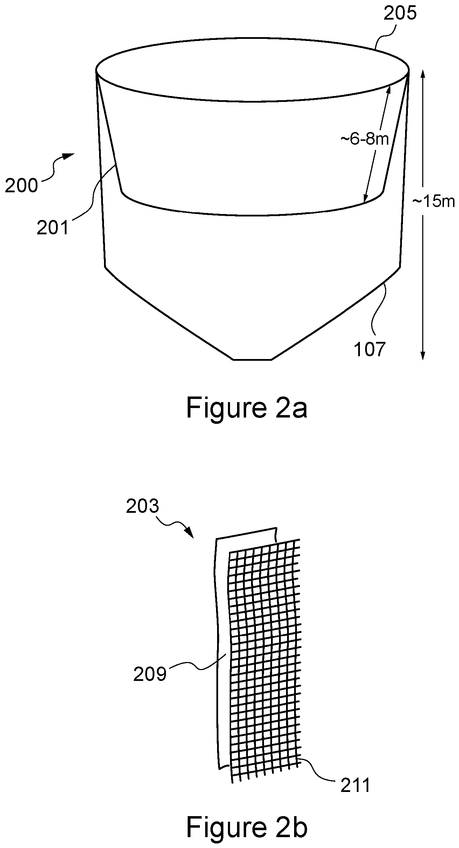

In Figure 2a, another embodiment of a salmon cultivation cage 200 is illustrated in which a curtain 201 of a filtration screen assembly 203 (illustrated in Figure 2b) suspended from a floating perimeter pipe 205 at an upper portion of the cage 200 and extends to a depth of 6 to 8 m in a similar configuration to that in Figure 1a. The filtration screen assembly 203, shown in Figure 2b, in this embodiment has a 150 µm mesh size woven Nylon mesh screen 209 and disposed adjacent and laminar thereto a single layer of reinforcing mesh 211 on one side thereof.

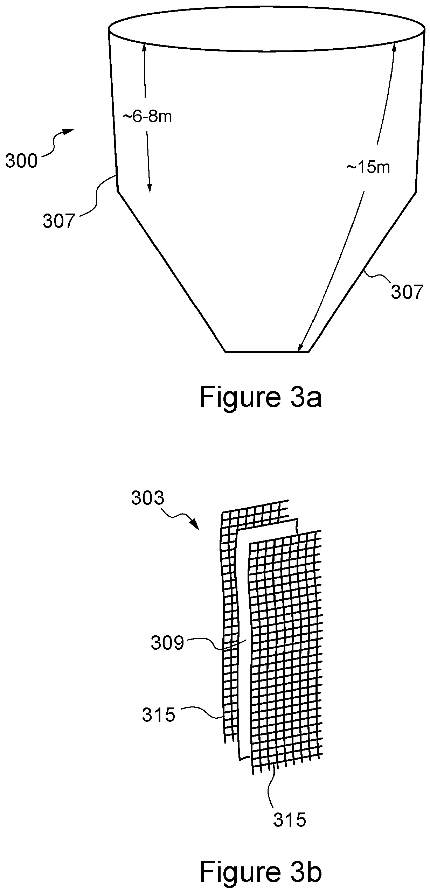

In Figure 3a, another embodiment of a salmon cultivation cage 300 comprises a structural netting 307 of polyester or polypropylene net having an outer layer 313 and an inner layer 315 (as illustrated in Figure 3b) and disposed therebetween a 150 µm mesh size woven Nylon mesh screen 309. The structural netting and screen assembly 303 extends the full depth of the cage of about 15 m depth. By encasing or enveloping the full cultivation volume, ingress of pests from any depth such as micro jellyfish is prevented in addition to ingress prevention of sea lice larvae.

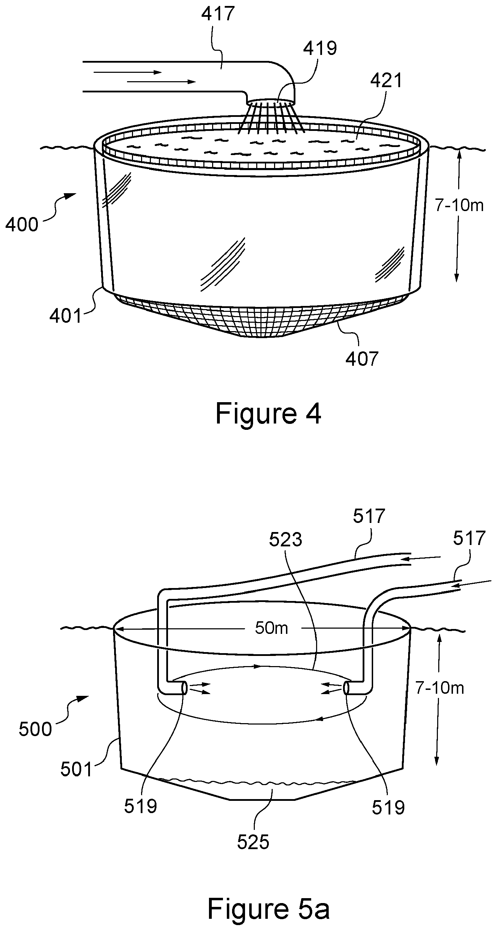

In Figure 4, a salmon cultivation cage 400 of depth 12 to 15 m and 50 m diameter and comprising a standard form of salmon cage including a structural netting 407 of polyester or polypropylene or other suitable netting is provided with a curtain 401 of a filtration screen arrangement 401. The filtration screen arrangement 401 comprises a curtain (filtration screen element) of from 40 to 100 µm mesh size woven Nylon mesh screen. A 40 to 100 µm mesh size is considered to be sized to inhibit the ingress of algal blooms into the salmon cage, especially agglomerations of algae. The curtain may be suspended from or in association with a floating perimeter pipe (not shown) and extends to a depth of 7 to 10 m, which is effective since most algal blooms occur near the surface. The curtain 401 is free floating at the bottom or may be weighted or secured to the enclosure net 407 of the cage 400. The curtain 401 is disposed outside the cage 400 (although it could also be disposed inside the cage), forming a curtain 401 about the outer perimeter of the cage 400 and generally disposed adjacent to the netting 407 of the cage.

The filtration screen arrangement 401 may be such that the curtain 401 can be moved between deployed position (suspended about the cage 400 to a depth of 7 to 10 m) when needed (e.g. where there is an algal bloom known or expected) and a stowed position. A stowed position may be rolled up in a case (ready for automated or manual deployment), or concertinaed and secured near the top of the cage.

When deployed, the small pore size, while allowing the flow of water, may lead to inhibition of water flow, especially when an algal bloom is present (which may clog the pores of the curtain 401) and thus a reduction of oxygen concentration in the enclosure volume of water. Thus, as shown in Figure 4, a supply of cold, oxygenated water may be supplied via the top of the cage 421 through a water supply pipe outlet 419 from an oxygenated water supply pipe 417 which may typically source its water from a 10 to 15 m depth outside of the cage (which may optionally be filtered through a 100 µm mesh filter). Water may then exit the cage through the structural netting 407 and optionally through the curtain 401.

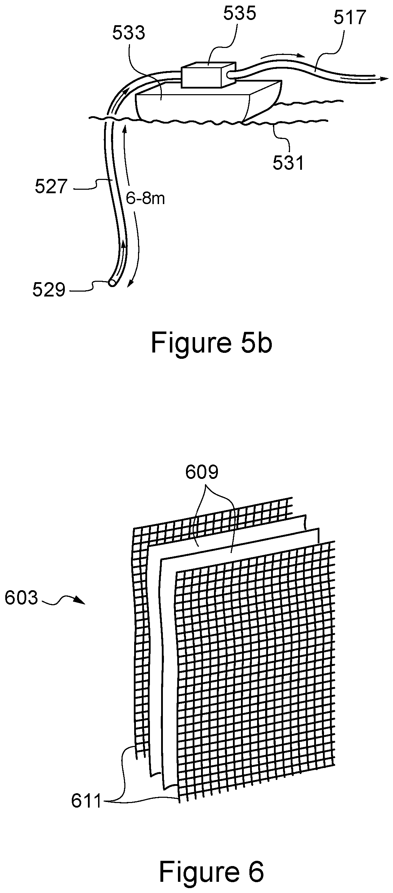

In Figure 5a, a fin fish (e.g. salmon) cultivation cage 500 of another embodiment comprises an enclosure 501 formed of a filtration screen assembly (for inhibiting ingress of marine copepods, such as sea lice, and/or marine parasites or pests into the fish cultivation volume) comprising a filtration element having a pore size of up to 200 µm (or optionally up to 100 µm making it also effective in inhibiting ingress of algal blooms) and each side of the filtration element a porous reinforcing element with an average pore size of greater than the filtration element. In this embodiment, the filtration screen assembly forms a full enclosure rather than just a curtain. The cage 500 has a depth of 7 to 10 m and 50 m diameter. Since flow of water into and out of the enclosure 501 may be reduced due to the pore sized of the mesh, a fresh supply of cold, oxygenated and preferably filtered sea water may be supplied to the cultivation volume via two oxygenated water supply pipes 517 sourcing water via pumps from say a 6 to 15 m depth outside of the aquaculture cage (see Figure 5b). The outlets 519 of the supply pipes 517 may be disposed at a depth of say 2 to 5 m within the enclosure 501 and configured to cause a circulatory movement or flow within the enclosure, which is beneficial to the fish. This helps to increase oxygen levels within the enclosure and also serves to reduce the water temperature in the enclosure. Water may flow out of the enclosure through the pores in the filtration screen assembly. Waste 525, including faeces, unused feed, etc, may collect at the base of the enclosure, with smaller particles of waste able to exit through the pores. The waste may be removed by pumping it out from the base of the enclosure periodically and may be processed (e.g. heat treated or de-salinated) for further use, e.g. as an agricultural fertilizer, or may be disposed of. This has an environmental benefit in that it reduces the pollution to the surrounding environment caused by the waste from the aquaculture cage.

In Figure 5b, the water supply pipe 517 is shown extending from a water pump 535 disposed on a feed barge 533 which is located nearby the cage 500. A water collection pipe 527 is provided to the water pump 535 and extends into the water such that the collection pipe inlet 529 is at a depth of 6 to 8 m below the water surface 531 in order to collect oxygenated, cold water for use. The water is passed through a filter of up to 200 µm, preferably of about 100 µm pore size/mesh, in order to ensure that sea lice larvae (and other pests such as micro-jellyfish) are not introduced into the aquaculture cage via the pump. The filter can be located at any suitable place, such as the inlet 529 or in or at either side of pump 535.

In Figure 6, a further embodiment of the filtration screen assembly 603 is illustrated, in which two layers of a filtration element 609, e.g. of 125 or 150 µm mesh size woven Nylon mesh, is provided and disposed between two layers of reinforcing mesh 611. The reinforcing mesh 611 may have a mesh size of considerably larger than the mesh screen 609 and provides robustness and protection for the mesh screen 609. The provision of two filtration elements 609 enables a greater robustness for the assembly 603, which is beneficial when used in high tidal flow areas or when utilized in forming a full enclosure or when it forms or is used for the enclosure structure of a cage.

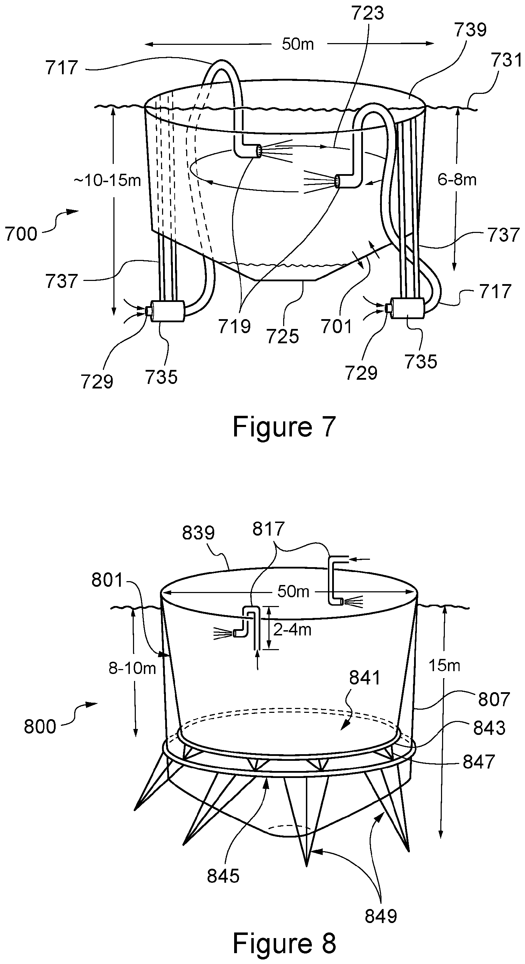

In an alternative embodiment of the system of Figure 5a, a fin fish (e.g. salmon) cultivation cage 700 is illustrated in Figure 7. Here, an enclosure 701 is again formed of a filtration screen assembly (for inhibiting ingress of marine copepods, such as sea lice, and/or marine parasites or pests into the fish cultivation volume) comprising a filtration element having a pore size of 150 µm (or optionally up to 100 µm making it also effective in inhibiting ingress of algal blooms) and each side of the filtration element a porous reinforcing element with an average pore size of greater than the filtration element. In this embodiment, the filtration screen assembly forms a full enclosure rather than just a curtain. The cage 700 has a depth of 6 to 8 m and 50 m diameter. Since flow of water into and out of the enclosure 701 may be reduced due to the pore size of the mesh, a fresh supply of cold, oxygenated and preferably filtered sea water may be supplied to the cultivation volume via two oxygenated water supply pipes 717, the outlets 719 of which may be disposed at a depth of say 2 to 5 m within the enclosure 701 and configured to cause a circulatory movement or flow within the enclosure 700. The water supply pipes 717 each extend over the cage rim 739 and to a depth of about 10 to 15 m to connect to submersed water pumps 735 which are disposed on stanchions 737 or other support members suspended from the cage rim 739 (e.g. floating HDPE pipes). Cold, oxygenated water is drawn from the surrounding sea through inlets 729 and pass through a filter, e.g. of 100 µm, located for example in each of the pumps 735. The pumps 735 may, for example, be 50 horsepower and capable of delivering about 10,000 litres per minute of filtered cold water into the cage. Water may simply flow out through the porous enclosure 701 (and indeed can flow in too). Again, waste 725 can collect in the bottom of the enclosure 701 for later removal (e.g. by pumping away).

In one particular embodiment of the invention shown in Figure 8, the fish cultivation system 800 has an external fish cultivation enclosure structure 807 of generally standard construction (e.g. polyester or polypropylene or other suitable netting) and an internal enclosure 801 comprising a water permeable and porous filtration screen assembly comprising a filtration element of, for example, 100, 125 or 150 µm mesh size woven Nylon mesh, sandwiched by two structurally supporting mesh layers. The internal enclosure 801 is disposed within the volume defined by the external enclosure structure 807 and may be a cylindrical or upturned truncated conical shape in which the side is provided by the filtration screen assembly and a base 841 is provided of tarpaulin or also formed from the filtration screen assembly construction. The sides and base 841 of the internal enclosure 801 may be defined by a weighted (e.g. sand-filled) HDPE pipe 843 disposed about the circumference about the interior of the internal enclosure 801. The internal enclosure may extend to a depth of about 8 to 10 m.

The external enclosure 807, which has a diameter of about 50 m and extends to a depth of about 15 m may be adapted with a circumferential HDPE pipe collar 845 disposed typically about the exterior of the external enclosure 807 and secured to the netting thereof. The external enclosure 807 may be provided with additional anchors 849 to secure it to the seabed (in addition to the conventional moorings). The internal enclosure 801 is secured to the external enclosure 807 by securing to a circumferential HDPE pipe defining the rim 839 and the weight HDPE pipe 843 may be secured to the circumferential collar 845 via securing anchors 847.

Should the base 841 be provided as a tarpaulin, it may be secured to the weighted pipe 843 via sewn in polyester or polypropylene loops. A tarpaulin base may be effective in improving the collection of waste from the aquaculture system.

The internal enclosure 801 may be raised from the aquaculture system and inspected or repaired periodically (to ensure it maintains its integrity and continues to serve to minimise sea lice larvae ingress into the enclosure).

The aquaculture system 800 according to this embodiment may be provided with oxygenated water supply pipes 817 with cold (filtered) seawater pumped in from about 15 depth and delivered via pipes 817 to within the internal enclosure 801 at a depth of from 2 to 4 m (and preferably in a way to cause some circulation of water in the enclosure volume).

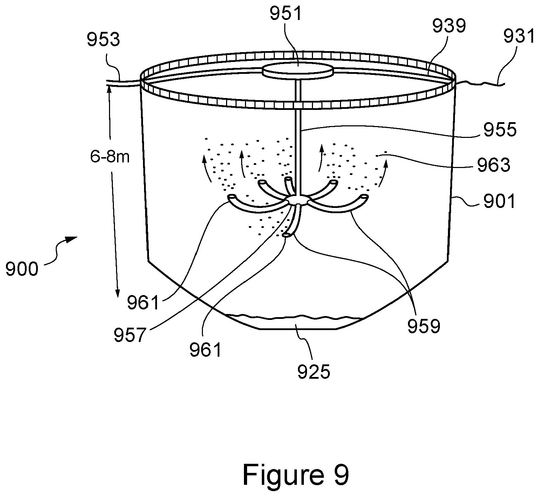

Figure 9 illustrates an embodiment of a further aspect of the invention which makes use of buoyant feed for providing to the fish in an aquaculture system 900. The system 900 comprises a regular or standard cage, in this case a fish cultivation enclosure structure defining a fish cultivation volume, which comprises a filtration screen assembly for inhibiting ingress of marine copepods, such as sea lice, and/or marine parasites or pests into the fish cultivation volume, the filtration screen assembly comprising a filtration element having a pore size of up to 200 µm and at least one porous reinforcing element with an average pore size of greater than the filtration element. The enclosure has a depth of from 6 to 8 m in this embodiment.

The feed system comprises a floating hub, optionally suspended from a birdcage (not shown) or moored to floating HDPE cage rim 939. The floating hub may be fed from a feed barge by feed supply pipe 953. A downpipe 955 extends downward from the hub 951 to a depth of about 3 to 5 m leading to a splitter 957 from which a plurality of lateral pipes 959 may extend leading to a plurality of outlets 961 from which the feed is released. Being buoyant, the feed slowly rises to the surface. This approach is significantly better for the salmon, who tend to feed from below in the wild, so a rising feed pellet offers more opportunity to achieve this. Secondly, feed is not wasted by falling through the bottom of the cage (and polluting the surrounding area). Thirdly, the amount of feed can be monitored by the amount reaching the surface (as opposed to the use of cameras at depth monitoring the amount of feed sinking below a certain level). Thus, the amount of waste feed (and thus the cost for feeding the fish) can be reduced.

### EXAMPLES

### Example 1

Test chambers to assess the effectiveness in inhibiting passage of lice larvae through a mesh screen were set up using a circle of mesh glued across an open end of a section of 15 cm pipe, modified to enable suspension from the rims of 2.5 litre buckets, with the mesh submerged.

The mesh screens used were samples of mesh of different pore size/material. The mesh screens are formed of monofilament synthetic fibres (of polyamide or polyester), having warp and weft monofilament fibres of equal thread density, are detailed in Table 1:

**Table 1**

| **Screen sample** | **Mesh size/ µm** | **Material** | **Threads/inch** | **Wt (oz/yd²)** | **Thickness (in)** | **Open area (%)** |
|---|---|---|---|---|---|---|
| **A** | 100 | Nylon 6 | 155 | 1.4 | 0.004 | 37 |
| **B** | 150 | Nylon 6 | 100 | 2.4 | 0.006 | 36 |
| **C** | 200 | Nylon 6 | 75 | 3 | 0.008 | 38 |
| **D** | 200 | Polyester | 80 | 2.2 | 0.006 | 41 |
| **E** | 250 | Nylon 6 | 62 | 3.2 | 0.01 | 39 |
| **F** | 300 | Nylon 6 | 56 | | 0.01 | 44 |

Six 2.5 litre buckets were provided with 1.5 litres of filtered, salmon-conditioned sea water (expected to contain traces of salmon pheromones and kairomones as an activation signal for *Lepeoptheirus salmonis (L.salmonis)* lice larvae.

Batches of approximately 100 one day post hatch *L.salmnis* nauplii (from ovigerous females) were counted into 250 mL beakers. The beaker was topped up to 250 ml using filtered sea water.

The lice-containing water from each nauplii batch was poured into a respective test chamber disposed in the 2.5 litre bucket and the beakers rinsed into the test chambers with sea water. After 30 minutes, the test chambers were lifted out of the water and the outer surfaces rinsed gently into the 2.5 litre buckets. The water remaining in the 2.5 litre buckets was concentrated and any lice that had passed through the mesh into the remaining water in the bucket were counted.

The results including % retention [being (total nauplii used - nauplii passed through)/total nauplii used * 100] are set out in Table 2:

**Table 2**

| **Experiment** | **Mesh size/ µm** | **Material** | **Nauplii used** | **Nauplii passed through** | **% retention** |
|---|---|---|---|---|---|
| **A** | 100 | Nylon | 95 | 0 | 100 |
| **B** | 150 | Nylon | 103 | 0 | 100 |
| **C** | 200 | Nylon | 107 | 50 | 53 |
| **D** | 200 | Polyester | 99 | 22 | 78 |
| **E** | 250 | Nylon | 105 | 92 | 12 |
| **F** | 300 | Nylon | 106 | 67 | 37 |

As can be seen from the table, the screens having a mesh size of 100 µm (screen A) and 150 µm (screen B) prevented passage of all the lice larvae. The screens from experiment C and D each excluded greater than 50% of the lice larvae. Screens of mesh size 250 µm or greater (screens E and F) were largely ineffective at inhibiting lice larvae transport.

### Example 2

A 0.5 metre square sample of filtration screen assembly was prepared, which comprised a 150 µm woven nylon mesh screen (as defined in Example 1) and disposed on each side of the screen a relatively stiff polypropylene mesh of mesh size approximately 0.65 cm. The filtration screen assembly sample was clamped in a horizontal orientation 1 litre of water poured on top of the sample, through an area of 20 cm square. The water was observed to pass through the screen sample without any apparent resistance in less than 2 seconds, leaving no puddling on the surface of the sample.

### Example 3

A 2 m by 1.5 m sample of a filtration screen assembly used in Example 2 was prepared and held by two people, one at each end, in a vertical orientation in shallow waters in the sea, to face incoming waves on a beach. Despite heavy saves the screen sample was observed to be highly permeable to sea water and although there was some physical resistance in the heaviest waves, the sea water was observed to pass through easily. The structural integrity of the screen sample was unaffected by exposure to the breaking waves.

It is believed that this demonstrates that the filtration screen assembly is not unduly restrictive to passage of water and will thus enable effective oxygenation to fish cultivation enclosures in sea water.

Further embodiments of the invention are described in the following clauses:
Clause 1. A fish cultivation system comprising
   a fish cultivation enclosure structure defining a fish cultivation volume; and, disposed in relation to the enclosure structure,
   a filtration screen assembly for inhibiting ingress of marine copepods into the fish cultivation volume, the filtration screen assembly comprising a filtration element having a pore size of up to 200 µm and at least one porous reinforcing element with an average pore size of greater than the filtration element.
Clause 2. A fish cultivation system according to clause 1, wherein the filtration element has a pore size of up to 180 µm.
Clause 3. A fish cultivation system according to clause 2, wherein the filtration element has a pore size of from 125 to 170 µm, preferably 130 to 160 µm.
Clause 4. A fish cultivation system according to any one of clauses 1 to 3, wherein the filtration element is a woven mesh.
Clause 5. A fish cultivation system according to clause 4, wherein the filtration element is formed of nylon or polyethylene.
Clause 6. A fish cultivation system according to any one of the preceding clauses, wherein the filtration element has an open area of from 30 to 45%.
Clause 7. A fish cultivation system according to any one of the preceding clauses, wherein the porous reinforcing element is disposed adjacent to and in laminar arrangement with the filtration element.
Clause 8. A fish cultivation element according to any one of the preceding clauses, wherein the filtration screen assembly comprises at least two reinforcing elements, a first, outer, reinforcing element and a second, inner, reinforcing element.
Clause 9. A fish cultivation element according to any one of the preceding clauses, wherein the or each porous reinforcing element has an average pore size of at least 500 µm.
Clause 10. A fish cultivation system according to any one of the preceding clauses, wherein the filtration screen assembly is disposed about a full perimeter of the enclosure structure.
Clause 11. A fish cultivation system according to any one of the preceding clauses, wherein the filtration screen assembly is configured to extend from a water surface of the water the fish cultivation enclosure is disposed in or a from a position above the water surface to a depth of at least 6 m.
Clause 12. A fish cultivation system according to any one of the preceding clauses, wherein the filtration screen assembly fully encloses the fish cultivation volume.
Clause 13. A fish cultivation system according to any one of the preceding clauses, wherein the or each porous reinforcing element is discrete from the fish cultivation enclosure structure.
Clause 14. A fish cultivation system according to clause 13, wherein the filtration screen comprises two discrete reinforcing elements, one disposed in adjacent and laminar relationship each side of the filtration element and wherein the filtration screen is disposed in the form of a curtain about an inner perimeter of the fish cultivation enclosure suspended from an upper portion of the fish cultivation enclosure, to a depth of at least 6 m.
Clause 15. A fish cultivation system according to any one of clauses 1 to 12, wherein the or at least one of the porous reinforcing elements is integral with or comprises the fish cultivation enclosure structure.
Clause 16. A fish cultivation system according to clause 15, wherein the fish cultivation enclosure structure comprises an enclosure net and wherein at least a portion of the enclosure net is configured to be one of the porous reinforcing elements of the filtration screen assembly.
Clause 17. A fish cultivation system according to any one of the preceding clauses, which is for the cultivation of salmon.
Clause 18. A fish cultivation system according to any one of the preceding clauses, wherein the marine copepods comprise sea lice and the device is for inhibiting ingress of larvae of sea lice into the fish cultivation enclosure.
Clause 19. A fish cultivation system according to clause 18, wherein the sea lice are of the genus *Lepeoptherius* and/or *Caligus.*
Clause 20. A fish cultivation system according to clause 19, wherein the sea lice are *L. salmonis.*
Clause 21. A filtration screen assembly for a fish cultivation system, the filtration screen assembly comprising a filtration element having a pore size of up to 200 µm and at least one porous structural supporting or reinforcing element with an average pore size of greater than the filtration element, whereby for inhibiting ingress of marine copepods into the fish cultivation volume.
Clause 22. A filtration screen assembly according to clause 21, which is as further defined in any one of clauses 2 to 20.
Clause 23. A method of screening a fish cultivation enclosure, the method comprising providing a filtration screen assembly as defined in clause 21 or clause 22 in relation to the fish cultivation enclosure.
Clause 24. A method of cultivating fish, the method comprising provide a fish cultivation enclosure having a filtration screen assembly as defined in clause 21 or clause 22 disposed in relation thereto to inhibit ingress of marine copepods into a fish cultivation volume.
Clause 25. Use of a mesh filtration element having a pore size of from 125 to 200 µm to inhibit ingress of the larvae of marine copepods into a fish cultivation enclosure by disposing the filtration element about an inner or outer perimeter of a fish cultivation enclosure to a depth of at least 6 m.

The invention has been described with reference to a preferred embodiment. However, it will be appreciated that variations and modifications can be effected by a person of ordinary skill in the art without departing from the scope of the invention.

## Claims

1. A fish cultivation system comprising
a fish cultivation enclosure structure defining a fish cultivation volume; and,
a filtration screen arrangement for inhibiting ingress of algae into the fish cultivation volume, the filtration screen arrangement comprising a filtration element having a pore size of from 15 to 95 µm,
wherein the filtration screen arrangement is disposed to the exterior or interior of the fish cultivation enclosure structure as a curtain and wherein the curtain extends to a depth of at least 6 m.

2. A fish cultivation system as claimed in claim 1, wherein the filtration element has a pore size of from 25 to 95µm.

3. A fish cultivation system as claimed in claim 2, wherein the filtration element has a pore size of from 40 to 80 µm.

4. A fish cultivation system as claimed in any one of the preceding claims, wherein the filtration screen arrangement further comprises at least one porous reinforcing element with an average pore size of greater than the filtration element.

5. A fish cultivation system as claimed in claim 4, wherein the at least one porous reinforcing element has a pore size of at least 500 µm.

6. A fish cultivation system as claimed claim 4 or claim 5, wherein the filtration screen arrangement comprises two porous reinforcing elements, one disposed on each side of the filtration element so as to sandwich it.

7. A fish cultivation system as claimed in any one of claims 4 to 6, wherein the or each porous reinforcing element is disposed adjacent to and in laminar arrangement with the filtration element.

8. A fish cultivation system as claimed in any one of the preceding claims, wherein the filtration screen arrangement is configured for deployment in the event of an algal bloom affecting or likely to affect the aquaculture system.

9. A fish cultivation system as claimed in claim 8, wherein the curtain may be lowered into a deployed configuration in which it forms a protective curtain and returned to its stowed position.

10. A fish cultivation system as claimed in claim 9, wherein the curtain may be concertinaed, rolled or reeled into a cartridge about a circumference of the aquaculture cage in its stowed position.

11. A fish cultivation system as claimed in any one of the preceding claims, wherein the filtration screen arrangement is disposed about a full perimeter of the enclosure structure.

12. A fish cultivation system as claimed in any one of the preceding claims, which is for the cultivation of salmon.

13. A fish cultivation system as claimed in any one of the preceding claims, which further comprises a water pumping system for pumping water into the fish cultivation volume.

14. A method of screening a fish cultivation enclosure against ingress of algae, the method comprising providing a filtration screen arrangement as defined in any one of claims 1 to 12 in relation to the fish cultivation enclosure.

15. Use of a mesh filtration element having a pore size of from 15 to 95 µm to inhibit ingress of algae into a fish cultivation enclosure by disposing the filtration element about an inner or outer perimeter of a fish cultivation enclosure to a depth of at least 6 m.
